# EUROPEAN PATENT SPECIFICATION

(11) **EP 0 488 498 B1**
(45) Date of publication and mention of the grant of the patent: **04.10.1995**
(21) Application number: 91307319.3
(22) Date of filing: 09.08.1991
(51) Int. Cl.: H04N 5/14

(54) **Motion signal detecting circuit**
Schaltung zur Detektion des Bewegungssignals
Circuit de détection du signal de mouvement

(30) Priority: 27.11.1990 KR 1928790
(43) Date of publication of application: 03.06.1992
(73) Proprietor: SAMSUNG ELECTRONICS CO., LTD., Suwon-City, Kyounggi-Do 441-370 (KR)
(72) Inventor: Ko, Jeong-wan, Jangan-ku, Suwon, Kyounggi-do (KR); Strolle, Christopher H., Glenside, Pennsylvania 19038 (KR)
(74) Representative: Stanley, David William

(56) References cited:
- DE-A- 3 211 742
- DE-A- 3 924 249
- JP-A- 2 281 890
- US-A- 4 953 032
- PATENT ABSTRACTS OF JAPAN vol. 13, no. 396 (E-815)(3744) 4 September 1989 & JP-A-1 140 887

## Description

The present invention relates to motion signal detecting circuits.

It is known for a standard television system, such as an NTSC or a PAL system, which represents images, to process a television signal adaptively in accordance with the degree of motion of the signal. This adaptive processing of the signal may result in quasi-motion picture regions between image regions being processed in a still picture signal processing method, and other image regions being processed in a motion picture signal processing method. If differences in the processing methods are perceived, and the different regions and the transition between them are discerned by a viewer, image quality is degraded.

For example, for the purpose of separating chrominance and luminance components from a composite video signal, a frame comb filter or a line comb filter may be used. As long as there is no change in the image signal at frame time intervals, when separating chrominance and luminance components from the composite video signal using the frame comb filter, the luminance and chrominance components can be completely separated. If the scene changes, however, over the frame time intervals, then some colour information will be present in the separated luminance component and some brightness information will be present in the chrominance component.

A line comb filter also used to separate the luminance and chrominance components from the composite video signal does not produce significantly degraded component signals in the presence of image motion. However, the line comb filter reduces the vertical resolution of the reproduced image in comparison with the frame comb filter. In addition, in locations where a vertical transition occurs, an image processed by the line comb filter may be degraded due to both colour information introduced into the luminance component, producing an image artifact known as hanging dots, and brightness information introduced into the chrominance, producing incorrect colours in the neighbourhood of the transition.

Therefore the television signal is adaptively processed by detecting the presence or absence of image motion. In the regions in which the image is stationary, the frame comb filter is used, and in the regions in which the image is moving, the line comb filter is used.

Another example of such adaptive processing is an adaptive double-scanned, non-interlaced scan converter. In such a converter, interstitial lines are displayed between lines of the current field. However, the interstitial lines may be those transferred from the preceding field. in the presence of image changes producing visible artifacts such as serrated contours. The interstitial lines may also be interpolated from lines within the current field, but the vertical resolution is reduced and line flicker may occur. In regions in which image changes are detected, intrafield interpolated interstitial lines are displayed and field-delayed interstitial lines are displayed in other ways.

Yet another example is an adaptive peaking circuitry in which regions having relatively high noise are processed with a relatively low peaking factor and regions having relatively low noise are processed with a relatively high peaking factor.

In all of the above examples, the television signals are processed adaptively in response to the values of estimated parameters of the image. The parameters are motion in the case of luminance/chrominance separation and double scanning non-interlace conversion, and a relative level of noise in the case of peaking. Differently processed regions, and noticeable boundaries between regions where the parameter is present and those where it is absent are undesirable artifacts introduced by the above types of adaptive processing types.

U.S. Patent US-A-5 113 262 (EP-A-471 517) on the invention entitled "An improved video signal recording system" filed on August 17, 1990 by Samsung Electronics Co. Limited, describes a recording system for recording and reproducing a full bandwidth video signal on and from a recording medium having a limited bandwidth by folding the high frequency component of a luminance signal into the low frequency component of the luminance signal.

In the U.S. Patent US-A-5 113 262, a motion signal which represents a moving image is recorded together with the folded luminance signal and the chrominance signal on the recording medium. The motion signal is used to control the transition between regions of the full bandwidth luminance signal which is unfolded into the original frequency bands when reproducing.

That is, in the above invention, the high frequency component of the luminance signal is folded into the low frequency component of the luminance signal in recording. At this time, the high frequency component of the luminance signal is modulated by a folding carrier, so that the folded luminance signal has a phase difference of 180 degrees between frames, between scanning lines, and between pixels.

Accordingly, in reproducing, the high frequency component folded into the low frequency component of the folded luminance signal is demodulated by the unfolding carrier having the same phase and frequency as those of the folding carrier, so that the high frequency component of the luminance signal is unfolded to the original frequency band.

However, the folding carrier and the sideband thereof will be present in the unfolded luminance signal. The resultant luminance signal unfolded by the folding carrier and the sidebands thereof has a phase difference of 180 degrees between frames.

As a result, the conventional motion signal detecting circuit for detecting the level difference of pixels between frames as the motion signal, has difficulty in detecting accurately the motion signal from the unfolded luminance signal due to the phase off-set between frames.

Korean Patent Application No. 90-18737 (corresponding to EP-A-0 487 186), on the invention entitled "A motion signal detecting circuit" filed on November 19, 1990 by Ko, describes techniques for eliminating the folding carrier and sidebands thereof contained in the unfolded luminance signal by a prefilter, and for detecting a motion signal through filtering, by means of a comb filter, the unfolded luminance signal in which the folding carrier and the sidebands are eliminated.

However, the above prefilter can eliminate the folding carrier and sidebands thereof contained in the unfolded luminance signal of the vertical and horizontal direction having a large correlation, but it is difficult to completely eliminate the folding carrier and sidebands thereof contained in the unfolded luminance signal of the diagonal direction, that is, the temporal direction having a small correlation.

Therefore, since the unfolded luminance signal which is output from the prefilter has a phase difference of 180 degrees by the folding carrier and sidebands remaining in the diagonal signal component, it is difficult to derive an accurate value for the diagonal direction of the motion signal which is the difference component between frames detected by the comb filter.

US-A-4,953,032 (Suzaki et al) discloses a motion signal generating circuit having a motion detecting circuit and a noise reduction circuit comprising a 1H memory to detect correlation between motion information signals pertaining to adjacent picture elements.

Preferred embodiments of the present invention aim to provide systems for smoothing or spreading transitions between image regions included in television signals to be transmitted which are processed in a still picture signal processing method and a motion picture signal processing method, and particularly to provide a circuit for accurately detecting a motion signal which represents a moving image, in a picture scene from an unfolded luminance signal, so as to control the transitions between image regions of a frequency-unfolded image signal.

According to a first aspect of the present invention, there is provided a motion signal detecting circuit comprising:
an input line (5) for inputting an unfolded luminance signal, the unfolded luminance signal being obtained by unfolding a first frequency component folded into a second frequency component so as to produce a signal having its original frequency band, but having a phase difference of 180 degrees between frames;
eliminating means (10) for eliminating a folding carrier and sidebands thereof contained in the unfolded luminance signal;
first comb filter means (60) for generating a first motion signal by subtracting a second signal from a first signal, the first signal being an undelayed output from said eliminating means and the second signal being a single frame delayed signal produced from the first signal; and
the circuit being **characterised in that** error compensation means (61, 70, 80, 40, 50) are provided for compensating errors contained in the first motion signal generated by said first comb filter means (60), the error compensation means comprising a second comb filter means (61) for generating a second motion signal by subtracting a third signal from said first signal, the third signal being a two frame delayed signal produced from the first signal, and means (70, 80, 40. 50) for logically switching the output of said first comb filter means (60) in dependence upon said second motion signal so as to allow said first motion signal to be transmitted or to be blocked in accordance with the value of said second motion signal.

Preferably, said second motion signal has a difference component between alternate frames of the unfolded luminance signal.

Preferably, said error compensation means comprises first absolute value means for converting the output of said second comb filter means to an absolute value;
first threshold value detecting means for comparing the output of said first absolute value means with a predetermined threshold value and then generating a motion signal in the form of a logic signal according to the result; and
a control switch for transmitting or blocking out the output of said first comb filter means according to the output of said first threshold value detector.

Preferably, said error compensation means further comprises a first signal spreader coupled between said first threshold value detector and the control switch, for spreading the output of said first threshold value detecting means in temporal, vertical and horizontal directions.

A motion signal detecting circuit as above, in accordance with the first aspect of the invention, may further comprise second absolute value means for converting the output of said error compensation means to an absolute value, and a second signal spreader for generating a spread motion signal by spreading the output of said second absolute value means in the temporal, vertical and horizontal directions.

Such a motion signal detecting circuit may further comprise a second threshold value detecting means coupled between said second absolute value means and said second signal spreader, for transmitting to said second signal spreader the output of said second absolute value means which is larger than a predetermined threshold value in order to eliminate a noise component included in the output of said second absolute value means.

Preferably, the predetermined threshold value of said second threshold value detecting means is set to have a higher value than that of said first threshold value detecting means.

Preferably, the spreading quantity of said first signal spreader is set to have a larger value than that of said second signal spreader.

The invention extends to a video recording and/or reproducing apparatus provided with a motion signal detecting circuit as above, according to the first aspect of the invention.

For a better understanding of the invention, and to show how the same may be carried into effect, reference will now be made, by way of example, to the accompanying diagrammatic drawings, in which:
Figure 1 is a block diagram of a preferred embodiment of a motion signal detecting circuit according to the present invention;
Figure 2 is a detailed circuit diagram of one example of a prefilter of the motion signal detecting circuit of Figure 1; and
Figure 3 is a detailed circuit diagram of one example of a signal spreader of the motion signal detecting circuit of Figure 1.

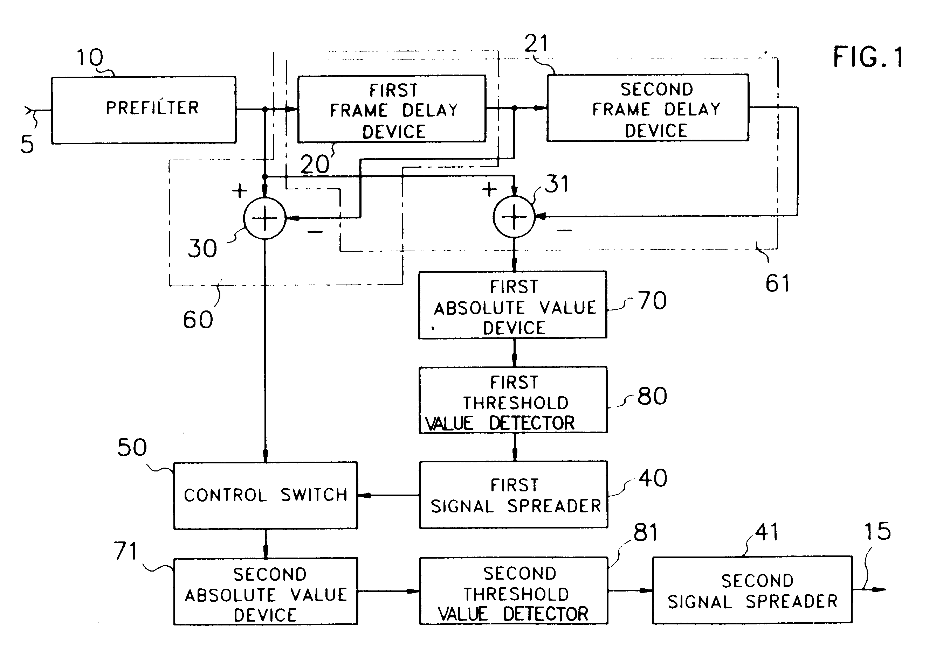

In Figure 1, an input line 5 is connected to the output of a frequency unfolding circuit (not shown) for the purpose of inputting an unfolded luminance signal and is connected to the input of a prefilter 10. An output terminal of the prefilter 10 is connected to an input terminal of a first frame delay device 20, a first input terminal of a first subtracter 30 and first input terminal of a second subtracter 31. An output terminal of the first frame delay device 20 is connected to an input terminal of a second frame delay device 21 and a second input terminal of the first subtracter 30. An output terminal of the second frame delay device 21 is connected to the second input terminal of the second subtracter 31.

An output terminal of the first subtracter 30 is connected to an input terminal of a control switch 50. An output terminal of the second subtracter 31 is connected to an input terminal of a first absolute value device 70. An output terminal of the first absolute value (or magnitude) device 70 is connected to the input terminal of a first threshold value detector 80. An output terminal of the first threshold value detector 80 is coupled to the input terminal of a first signal spreader 40. An output terminal of the first signal spreader 40 is coupled to a control terminal of the control switch 50. An output terminal of the control switch 50 is connected to an input terminal of a second absolute value device 71. An output terminal of the second absolute value device 71 is coupled to an input terminal of a second threshold value detector 81. An output terminal of the second threshold value detector 81 is connected to an input terminal of a second signal spreader 41. An output terminal of the second signal spreader 41 is connected through an output line 15 to a control terminal of a soft switch (not shown) for mixing the spatially processed luminance signal with a temporally processed luminance signal.

Here, a portion 60 including the first subtracter 30 and the first frame delay device 20 constitutes a comb filter circuit, and a portion 61 including the second subtracter 31, first and second frame delay devices 20 and 21 constitutes another comb filter circuit.

The unfolded luminance signal which is fed to the input line 5 includes the folding carrier and the sidebands.

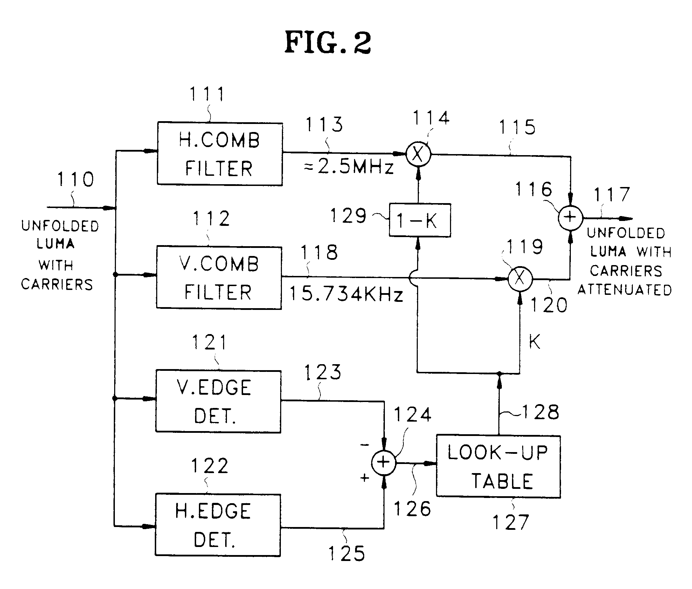

In operation, the prefilter 10 eliminates the folding carrier and sidebands contained in the unfolded luminance signal by filtering the unfolded luminance signal being input through input line 5. An example of a circuit diagram of the prefilter 10 is described in U.S. Patent Application No 07/562,907 on the invention entitled "an improved apparatus for eliminating the folding carrier and sidebands for the unfolded video signal" filed on August 6, 1990, by Ko et al. This patent application corresponds to Patent Application GB 91 09732.9 (Publication No. GB 2 246 926 A) filed 4 May 1991, a copy of the specification of which is filed with the present European Patent Application. An example of such a circuit is shown in Figure 2.

Referring to Figure 2, equal amplitudes of the unfolded luminance signal on input line 110 are passed through a horizontal comb filter 111 and a vertical comb filter 112, and, unless affected by multipliers 114 and 119, equal amplitudes of the two signals are combined in adder 116 and the sum is available at an output 117. The horizontal comb filter 111 is designed to cancel the sidebands of the folding carrier at or about 2.5 Mhz, and the vertical comb filter 112 is designed to remove the line frequency of 15,734 Hz. However, the cancellations of the carrier and sidebands may be incomplete, since they are affected by the brightness variations in the picture being scanned.

Cancellation of the horizontal and vertical carriers on the output line 117 is achieved by the operation of a vertical scan edge detector 121 and a horizontal scan edge detector 122. When a "vertical" edge or discontinuity is detected during a vertical scan a signal over line 123 and through subtracter 124 to a look-up table 127 causes a signal having a value of K over line 128 from look-up table 127 to increase the proportion of the output at 117 from the horizontal comb filter 111, whose output is not affected by the vertical edge, and decrease the proportion from the vertical comb filter 112. Likewise, when a "horizontal" edge is detected during a horizontal scan, a signal over line 125 and through subtracter 124 causes a signal having a value of K over line 128 both to increase the proportion of the output at 117 from the vertical comb filter 112, whose output is not affected by the horizontal edge, and decrease the proportion from the horizontal comb filter 111. In each case, the cancellation of carrier components is improved by increasing the output proportion from the comb filter whose output is not affected by the brightness edge encountered.

Referring again to Figure 1, the first frame delay device 20 delays by a period of one frame the unfolded luminance signal from which the folding carrier and sidebands are eliminated, and supplies it to the first subtracter 30 and the second frame delay device 21.

The second frame delay device 21 further delays the output of the first frame delay device 20 by a period of one more frame.

The first subtracter 30 subtracts the output of the first frame delay device 20 from the output of the prefilter 10, and generates the difference signal between frames of the unfolded luminance signal.

The second subtracter 31 subtracts the output of the second frame delay device 21 from the output of the prefilter 10 and generates the difference signal between alternate frames of the unfolded luminance signal.

Since the difference signal generated from the first subtracter 30 results in a sum signal between frames due to the folding carrier remaining in the diagonal direction of the unfolded luminance signal without being completely eliminated by the prefilter 10, the image appears to move even if it does not move actually. While, even if the folding carrier remains in the diagonal direction of the unfolded luminance signal without being completely eliminated by the prefilter 10, the difference signal between alternate frames generated from the second subtracter 31 has the accurate difference value of the components between frames.

The first absolute value device 70 receives the difference signal between alternate frames of the unfolded luminance signal which is the output of the second subtracter 31 having positive or negative values according to the moving direction and the brightness of the video signal and changes it to a positive value.

The first threshold value detector 80 compares the output of the first absolute value device 70 with a predetermined threshold value, and generates a motion signal having a value of "1" for a larger signal than the predetermined threshold value, and a value of "0" for a smaller signal than the predetermined threshold value. or vice-versa.

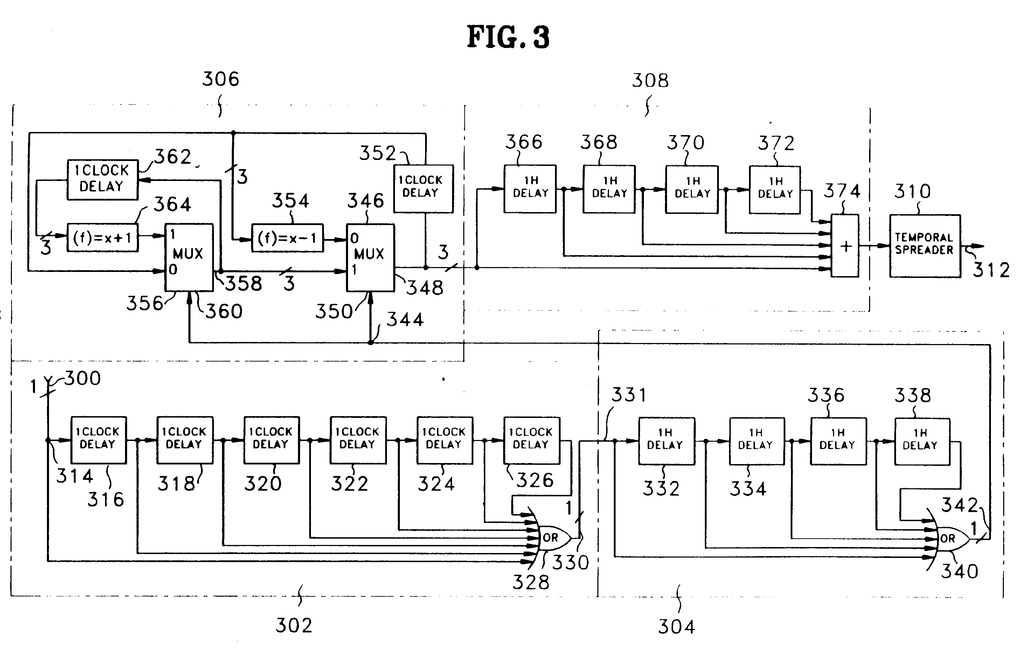

The first signal spreader 40 processes a motion signal based upon the difference signal between alternate frames of the unfolded luminance signal generated in the first threshold value detector 80 to be spread in both vertical and horizontal directions, and generates a motion signal based upon the difference signal between alternate frames of the spread, unfolded luminance signal. The first signal spreader 40 may be constructed in a similar manner to the signal spreader described in U.S. Patent Application serial No. 07/531,057 entitled "A control signal spreader", filed on May 31, 1990, by Ko et al. This patent application corresponds to Patent Application GB 91 08683.5 (Publication No. GB 2 245 448 A) filed 23 April 1991, a copy of the specification of which is filed with the present European Patent Application. An example of such a circuit is shown in Figure 3.

In Figure 3, a horizontal widener 302 has an input terminal 314 connected to a series of six clock delays 316 through 326. The output of an OR gate 328 is connected to an output terminal 330, and seven inputs of the OR gate 328 are respectively connected to the input terminal 314 and the ends of the clock delays 316-326 that are remote from the input terminal 314. Any motion signal having an amplitude of 1 indicating the presence of a phenomenon such as motion will be repeated six times at the output terminal 330.

The vertical widener 304 comprises four 1-H delays 332, 334, 336 and 338 connected in series to an input terminal 331, and an OR gate 340 of which the output is connected to an output terminal 342 and five inputs are respectively connected to the input terminal 331 and the ends of the 1-H delays 332-338 that are remote from the input terminal 331. Any line of motion signals applied to the input terminal 331 will be repeated four times at the output terminal 342.

Motion signals having the logic value of 0 will pass through the horizontal widener circuit 302 and vertical widener circuit 304 without any delay and the logic value of 1, indicating the presence of a phenomenon such as motion, is repeated so as to form a rectangle of logic 1's that is 7 clock cycles wide and 5 lines high.

The line signal spreader 306 is coupled to the output terminal 342 of the vertical widener 304 and functions to produce a ramp of increasing signal values along a line that increases from the value of 0 to a maximum value, such as 7, during the first 6 motion signal periods referred to. It then holds the maximum value as long as 1's appear at the terminal 344, and when they cease, it produces a ramp of decreasing signal values along the lines over a period of 6 clock cycles. This is done in the same way along the line whenever the motion signal assumes the logic value of 1, and along the 4 succeeding lines so that there are 5 identical lines.

For performing the line signal spreading function just described, a multiplexer (MUX) 346 has an output 348, an input labelled 0, an input labelled 1 and a switching control input 350 to which logical values of 0 and 1 may be applied. When a logic 0 is applied to the control input 350, the output 348 is connected to the input labelled 0, and when a logic 1 is applied to the input 350, the output 348 is connected to the input labelled 1. A one clock delay element 352 and a generator 354 that performs the function f(x)=x-1 are connected in series between the output 348 and the input labelled 0. The generator 354 cannot go below a value of 0. Thus, when no motion is detected and a logic 0 is at input terminal 300, logic 0's are passed through the widener circuits 302 and 304 to terminal 344, and the output 348 of the MUX 346 will be 0. If by some chance the signal at the output 348 of the MUX 346 should be other than 0, it will be reduced to 0 in at most 4 clock cycles by the operation of the generator 354. As will be seen, the MUX 346 will produce the ramp of decreasing values previously referred to.

The ramp of increasing value. previously referred to, is formed by a MUX 356. It has an output 358 that is connected to the input of MUX 346 that is labelled 1, an input labelled 0. an input labelled 1 and a switching control input 360 to which logic values of 0 or 1 may be applied. As in the MUX 346, a logic 1 at the control input 360 connects the output 358 to the input labelled 1, and a logic 0 at the control 360 connects the output 358 to the input labelled 0. A one clock delay 362 and a generator 364 that performs the function f(x)=x+1 are connected in series between the output 358 and the input labelled 1. The generator 364 cannot produce a signal value above some selected maximum. such as 7. The input of the MUX 356 that is labelled 0 is coupled to the output 348 of the MUX 346.

For making the signal values for corresponding pixels along the scan lines available, the vertical signal spreader 308 comprises four 1-H delays 366, 368, 370 and 372 and an adder 374 for adding the output 348 and the outputs of the four 1-H delays 366 through 372.

Here, the motion signal values at the output 348 and at the ends of the four 1-H delays 366 through 372 that are remote from the output 348 could be respectively weighted before they are combined in the means for combining them, that is, an adder 374. Also, a temporal spreader 310 is suitably composed of a low-pass filter. It provides gradual transitions between still and motion portions of a scene in the temporal domain. The output of the temporal spreader 310 is supplied to the control switch 50 of Figure 1 through an output line 312.

Referring again to Figure 1, the control switch 50 allows the output of the first subtracter 30 to be transmitted to the input terminal of the second absolute value device 71 or to be blocked out therefrom according to the output of the first signal spreader 40. In more detail, the control switch 50 can be used to operate logically the output of the first subtracter 30 and the output of the first signal spreader 40 to eliminate the errors contained in the output of the first subtracter 30. because the control switch 50 allows the output of the first subtracter 30 to be transmitted to the second absolute value device 71 as the motion signal when the output signal of the signal spreader 40 is logically high (or low), that is, when the image is moved (or not moved).

The second absolute value device 71 converts the difference signal between frames of the unfolded luminance signal having both the positive and the negative values through the control switch 50 into only the positive signal.

In order to eliminate the minute noise components contained in the difference signal between frames of the unfolded luminance signal, the second threshold value detector 81 detects the difference signal between frames of the luminance signal having the larger value than the predetermined threshold value among the output signals of the second absolute value device 71, and supplies the resultant difference signal to the second signal spreader 41.

The second signal spreader 41 spreads the difference signal between the frames of the positive unfolded luminance signal input from the second threshold value detector 81 in the temporal, vertical and horizontal directions, and supplies the resultant spread difference signal through an output line 15 to the control terminal of the soft switch (not shown) as the motion signal.

At this time, since the unfolded luminance signal has a phase difference of 180 degrees between frames due to the folding carrier, the difference signal between frames has a larger noise component than that of the difference signal between alternate frames. Accordingly, it is desirable that the predetermined threshold value of the first threshold value detector 80 is set to a lower value having wider spreading than that of the second threshold value detector 81.

Also, the spreading quantity of the first signal spreader 40 is set to be greater than that of the second signal spreader 41. That is, since the difference signal between alternate frames is detected later than that between frames, the actual motion between frames cannot be followed. Accordingly, to compensate the above delayed detection. the spreading quantity of the difference signal between alternate frames is set to a larger value than the value between frames.

The construction and operation of the second signal spreader 41 are very similar to those of the first signal spreader 40 described above. Thus, a detailed description thereof is not repeated.

In the above described embodiment of the present invention, by utilizing the property of the unfolded luminance signal having the same phase relationship every other frame, the errors contained in the difference signal between the frames can be eliminated by the difference signal between alternate frames, so that the accurate motion signal, i.e. the difference component between frames of the unfolded luminance signals, can be accurately detected.

## Claims

1. A motion signal detecting circuit comprising:
an input line (5) for inputting an unfolded luminance signal, the unfolded luminance signal being obtained by unfolding a first frequency component folded into a second frequency component so as to produce a signal having its original frequency band, but having a phase difference of 180 degrees between frames;
eliminating means (10) for eliminating a folding carrier and sidebands thereof contained in the unfolded luminance signal;
first comb filter means (60) for generating a first motion signal by subtracting a second signal from a first signal, the first signal being an undelayed output from said eliminating means and the second signal being a single frame delayed signal produced from the first signal; and
error compensation means (61, 70, 80, 40, 50) for compensating errors contained in the first motion signal generated by said first comb filter means (60), the error compensation means comprising a second comb filter means (61) for generating a second motion signal by subtracting a third signal from said first signal, the third signal being a two frame delayed signal produced from the first signal, and means (70, 80, 40. 50) for logically switching the output of said first comb filter means (60) in dependence upon said second motion signal so as to allow said first motion signal to be transmitted or to be blocked in accordance with the value of said second motion signal.

2. A motion signal detecting circuit as claimed in claim 1, wherein said second motion signal has a difference component between alternate frames of the unfolded luminance signal.

3. A motion signal detecting circuit as claimed in claim 1 or 2, wherein said error compensation means comprises first absolute value means (70) for converting the output of said second comb filter means (61) to an absolute value;
first threshold value detecting means (80) for comparing the output of said first absolute value means (70) with a predetermined threshold value and then generating a motion signal in the form of a logic signal according to the result; and
a control switch (50) for transmitting or blocking out the output of said first comb filter means (60) according to the output of said first threshold value detecting means (80).

4. A motion signal detecting circuit as claimed in claim 3, wherein said error compensation means further comprises a first signal spreader (40) coupled between said first threshold value detecting means (80) and the control switch (50), for spreading the output of said first threshold value detecting means (80) in temporal, vertical and horizontal directions.

5. A motion signal detecting circuit as claimed in any of claims 1 to 4, further comprising second absolute value means (71) for converting the output of said error compensation means to an absolute value, and a second signal spreader (41) for generating a spread motion signal by spreading the output of said second absolute value means (71) in the temporal, vertical and horizontal directions.

6. A motion signal detecting circuit as claimed in claim 5, further comprising a second threshold value detecting means (81) coupled between said second absolute value means (71) and said second signal spreader (41), for transmitting to said second signal spreader (41) the output of said second absolute value means (71) which is larger than a predetermined threshold value in order to eliminate a noise component included in the output of said second absolute value means (71).

7. A motion signal detecting circuit as claimed in claim 6, wherein the predetermined threshold value of said second threshold value detecting means (81) is set to have a higher value than that of said first threshold value detecting means (80).

8. A motion signal detecting circuit as claimed in claim 5, 6, or 7, wherein the spreading quantity of said first signal spreader (40) is set to have a larger value than that of said second signal spreader (41).

9. A video recording and/or reproducing apparatus provided with a motion signal detecting circuit according to any of the preceding claims.

## Patentansprüche

1. Eine Bewegungssignal-Erfassungsschaltung, umfassend:
eine Eingangsleitung (5) zum Eingeben eines entfalteten Helligkeitssignals, wobei das entfaltete Helligkeitssignal durch Entfalten einer ersten Frequenzkomponente, die in eine zweite Frequenzkomponente gefaltet worden ist, erhalten wird, um ein Signal zu erzeugen, das sein ursprüngliches Frequenzband besitzt, aber eine Phasendifferenz von 180 Grad zwischen Bildern aufweist;
eine Entfernungseinrichtung (10) zum Entfernen eines Faltungsträgers und seiner Seitenbänder, die in dem entfalteten Helligkeitssignal enthalten sind;
eine erste Kammfiltereinrichtung (60) zum Erzeugen eines ersten Bewegungssignals, indem ein zweites Signal von einem ersten Signal subtrahiert wird, wobei das erste Signal ein unverzögerter Ausgang von der genannten Entfernungseinrichtung ist und das zweite Signal ein um ein einzelnes Bild verzögertes Signal ist, das von dem ersten Signal erzeugt wird; und
eine Fehlerausgleichseinrichtung (61, 70, 80, 40, 50) zum Ausgleichen von Fehlern, die in dem ersten Bewegungssignal enthalten sind, das von der genannten ersten Kammfiltereinrichtung (60) erzeugt worden ist, wobei die Fehlerausgleichseinrichtung eine zweite Kammfiltereinrichtung (61) zum Erzeugen eines zweiten Bewegungssignals durch Subtrahieren eines dritten Signals von dem genannten ersten Signal umfaßt, das dritte Signal ein um zwei Bilder verzögertes Signal ist, das von dem ersten Signal erzeugt wird, und eine Einrichtung (70, 80, 40, 50) zum logischen Schalten des Ausgangs der genannten ersten Kammfiltereinrichtung (60) in Abhängigkeit von dem genannten zweiten Bewegungssignal, damit entsprechend dem Wert des genannten zweiten Bewegungssignal das genannte erste Bewegungssignal übertragen oder gesperrt werden kann.

2. Eine Bewegungssignal-Erfassungsschaltung, wie in Anspruch 1 beansprucht, in der das genannte zweite Bewegungssignal eine Differenzkomponente zwischen abwechselnden Bildern des entfalteten Helligkeitssignals aufweist.

3. Eine Bewegungssignal-Erfassungsschaltung, wie in Anspruch 1 oder 2 beansprucht, in der die genannte Fehlerausgleichseinrichtung umfaßt eine erste Absolutwerteinrichtung (70) zum Umwandeln des Ausgangs der genannten zweiten Kammfiltereinrichtung (61) in einen Absolutwert;
eine erste Schwellenwerterfassungseinrichtung (80), um den Ausgang der genannten ersten Absolutwerteinrichtung (70) mit einem vorbestimmten Schwellenwert zu vergleichen und dann ein Bewegungssignal in der Form eines logischen Signals gemäß dem Ergebnis zu erzeugen; und
einen Steuerschalter (50) zum Übertragen oder Sperren des Ausgangs der genannten ersten Kammfiltereinrichtung (60) gemäß dem Ausgang der genannten ersten Schwellenwerterfassungseinrichtung (80).

4. Eine Bewegungssignal-Erfassungsschaltung wie in Anspruch 3 beansprucht, in der die genannte Signalausgleichseinrichtung ferner eine erste Signaldehnungseinrichtung (40) umfaßt, der zwischen der genannten ersten Schwellenwerterfassungseinrichtung (80) und dem Steuerschalter (50) zum Dehnen des Ausgangs der genannten ersten Schwellenwerterfassungseinrichtung (80) in der zeitlichen, vertikalen und horizontalen Richtung verbunden ist.

5. Eine Bewegungssignal-Erfassungsschaltung, wie in irgendeinem der Ansprüche 1 bis 4 beansprucht, die ferner eine zweite Absolutwerteinrichtung (71) zum Umwandeln des Ausgangs der genannten Fehlerausgleichseinrichtung in einen Absolutwert und eine zweiten Signaldehnungseinrichtung (51) umfaßt, um ein gedehntes Bewegungssignal zu erzeugen, indem der Ausgang der genannten zweiten Absolutwerteinrichtung (71) in der zeitlichen, vertikalen und horizontalen Richtung gedehnt wird.

6. Eine Bewegungssignal-Erfassungsschaltung, wie in Anspruch 5 beansprucht, die ferner eine zweite Schwellenwerterfassungseinrichtung (81) umfaßt, die zwischen der genannten zweiten Absolutwerteinrichtung (71) und der genannten zweiten Signaldehnungseinrichtung (41) gekoppelt ist, um den Ausgang der genannten zweiten Absolutwerteinrichtung (71) zum Übertragen, der größer als ein vorbestimmter Schwellenwert ist, um eine Rauschkomponente auszuschließen, die in dem Ausgang der genannten zweiten Absolutwerteinrichtung (71) enthalten ist.

7. Eine Bewegungssignal-Erfassungsschaltung, wie in Anspruch 6 beansprucht, in der der vorbestimmte Schwellenwert der genannten zweiten Schwellenwerterfassungseinrichtung (81) auf einen höheren Wert als denjenigen der genannten ersten Schwellenwerterfassungseinrichtung (80) gesetzt ist.

8. Eine Bewegungssignal-Erfassungsschaltung, wie in Anspruch 5, 6 oder 7 beansprucht, in der die Dehnungsgröße der genannten ersten Signaldehnungseinrichtung (40) auf einen größeren Wert als denjenigen der genannten zweiten Signaldehnungseinrichtung (41) gesetzt ist.

9. Eine Videoaufzeichnungs- und/oder Wiedergabevorrichtung, die mit einer Bewegungssignal-Erfassungsschaltung gemäß irgendeinem der vorhergehenden Ansprüche versehen ist.

## Revendications

1. Circuit de détection de signal de mouvement, comprenant:
- une ligne d'entrée (5) pour introduire un signal de luminance déplié, le signal de luminance déplié étant obtenu en dépliant une première composante de fréquence repliée dans une seconde composante de fréquence, de manière à produire un signal ayant sa bande de fréquences initiale mais ayant une différence de phase de 180 degrés entre trames;
- des moyens de suppression (10) pour supprimer une porteuse de repliage et ses bandes latérales contenues dans le signal de luminance déplié;
- des premiers moyens de filtre en peigne (60) pour générer un premier signal de mouvement en soustrayant un second signal d'un premier signal, le premier signal étant une sortie non retardée provenant des moyens de suppression et le second signal étant un signal retardé d'une seule trame produit à partir du premier signal; et
- des moyens de compensation d'erreur -61, 70, 80, 40, 50) pour compenser des erreurs contenues dans le premier signal de mouvement généré par les premiers moyens de filtre en peigne (60), les moyens de compensation d'erreur comprenant des seconds moyens de filtre en peigne (61) pour générer un second signal de mouvement en soustrayant un troisième signal du premier signal, le troisième signal étant un signal retardé de deux trames produit à partir du premier signal, et des moyens (70, 80, 40, 50) pour commuter logiquement la sortie des premiers moyens de filtre en peigne (60) en fonction du second signal de mouvement, de manière à permettre au premier signal de mouvement d'être transmis ou bloqué suivant la valeur du second signal de mouvement.

2. Circuit de détection de signal de mouvement selon la revendication 1, caractérisé en ce que le second signal de mouvement a une composante de différence entre trames alternées du signal de luminance déplié.

3. Circuit de détection de signal de mouvement selon la revendication 1 ou 2, caractérisé en ce que les moyens de compensation d'erreur comprennent des premiers moyens de valeur absolue (70) pour convertir la sortie des seconds moyens de filtre en peigne (61) en une valeur absolue;
- des premiers moyens de détection de valeur de seuil (80) pour comparer la sortie des premiers moyens de valeur absolue (70) à une valeur de seuil prédéterminée et pour générer ensuite un signal de mouvement se présentant sous la forme d'un signal logique selon le résultat; et
- un commutateur de commande (50) pour transmettre ou bloquer la sortie des premiers moyens de filtre en peigne (60) suivant la sortie des premiers moyens de détection de valeur de seuil (80).

4. Circuit de détection de signal de mouvement selon la revendication 3, caractérisé en ce que les moyens de compensation d'erreur comprennent en outre un premier extenseur de signal (40) couplé entre les premiers moyens de détection de valeur de seuil (80) et le commutateur de commande (50), pour étendre la sortie des premiers moyens de détection de valeur de seuil (80) dans les directions temporelle, verticale et horizontale.

5. Circuit de détection de signal de mouvement selon l'une quelconque des revendications 1 à 4, caractérisé en ce qu'il comprend en outre des seconds moyens de valeur absolue (71) pour convertir la sortie des moyens de compensation d'erreur en une valeur absolue, et un second extenseur de signal (41) pour générer un signal de mouvement d'extension en étendant la sortie des seconds moyens de valeur absolue (71) dans les directions temporelle, verticale et horizontale.

6. Circuit de détection de signal de mouvement selon la revendication 5, caractérisé en ce qu'il comprend en outre des seconds moyens de détection de valeur de seuil (81) couplés entre les seconds moyens de valeur absolue (71) et le second extenseur de signal (41) pour transmettre au second extenseur de signal (41) la sortie des seconds moyens de valeur absolue (71) qui est supérieure à une valeur de seuil prédéterminée, de manière à supprimer une composante de bruit comprise dans la sortie des seconds moyens de valeur absolue (71).

7. Circuit de détection de signal de mouvement selon la revendication 6, caractérisé en ce que la valeur de seuil prédéterminée des seconds moyens de détection de valeur de seuil (81) est réglée pour avoir une valeur supérieure à celle des premiers moyens de détection de valeur de seuil (80).

8. Circuit de détection de signal de mouvement selon la revendication 5, 6 ou 7, caractérisé en ce que la quantité d'extension du premier extenseur de signal (40) est réglée pour avoir une valeur supérieure à celle du second extenseur de signal (41).

9. Appareil d'enregistrement et/ou de reproduction vidéo muni d'un circuit de détection de signal de mouvement selon l'une quelconque des revendications précédentes.
